(19) Europäisches Patentamt
European Patent Office
Office européen des brevets

(11) EP 1 188 942 B1

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(51) Int Cl.$^7$: **F16C 33/04**

(21) Anmeldenummer: **01121665.2**

(22) Anmeldetag: **13.09.2001**

(54) **Mit Grafit beschichteter Formkörper aus gesintertem Siliciumcarbid**

Graphite coated shaped body made from sintered silicon carbide

Corps moule avec revêtement en graphite formé de carbure de silicium fritté

(84) Benannte Vertragsstaaten:
**DE GB IT**
Benannte Erstreckungsstaaten:
**AL LT LV MK RO SI**

(30) Priorität: **14.09.2000 DE 10045339**

(43) Veröffentlichungstag der Anmeldung:
**20.03.2002 Patentblatt 2002/12**

(73) Patentinhaber: **Wacker-Chemie GmbH**
**81737 München (DE)**

(72) Erfinder:
- **Thaler, Hubert**
  **87437 Kempten (DE)**
- **Schwetz, Karl, Dr.**
  **87477 Sulzberg (DE)**
- **Kayser, Armin**
  **87474 Buchenberg (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
**EP-A- 0 497 345** **EP-A- 0 578 408**
**US-A- 5 656 213**

- **DATABASE WPI Section Ch, Week 198448 Derwent Publications Ltd., London, GB; Class L02, AN 1984-297768 XP002182478 & JP 59 184769 A (HITACHI CHEM CO LTD), 20. Oktober 1984 (1984-10-20)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft einen mit Grafit beschichteten Formkörper aus gesintertem Siliciumcarbid.

Dichtes, gesintertes SiC zeichnet sich durch eine Kombination wertvoller Eigenschaften aus, wie hohe Härte und Verschleißfestigkeit, Hochtemperaturfestigkeit, hohe Wärmeleitfähigkeit, Thermoschockbeständigkeit, sowie Oxidations- und Korrosionsbeständigkeit. Aufgrund dieser Eigenschaften hat sich heute festphasengesintertes SiC als nahezu idealer Werkstoff für verschleißbeanspruchte Gleitlager sowie Gleitringdichtungen, z.B. im chemischen Apparate- und Maschinenbau, eingeführt.

Aus US 5939185 vom 17.8.99 ist bekannt, daß SiC bei minimiertem Korngrenzengehalt auch gegen Heißwasser korrosionsresistent ist. Dies wird bewirkt durch ein bimodales, grobkristallines Plattengefüge des SiC sowie durch zusätzlich vorhandenen Grafit, welcher als partikuläre Begleitphase im gesamten SiC-Körper der Gleitringdichtung vorhanden ist. Dieser Grafit vermindert die tribochemische Korngrenzenkorrosion, die bei Wirktemperaturen von über 200°C einsetzt. Nachteiligerweise zeigen Gleitringdichtungen aus diesem grobkristallinen Werkstoff eine sehr lange Einlaufzeit (=200 h). Zudem zeigten sich auch mit diesem Gleitwerkstoff, wenn er elektrisch isoliert eingebaut wurde, (z.B. als Gleitringdichtung in einer Speisewasserpumpe) Korrosionserscheinungen am SiC Ring, die chemisch bzw. tribochemisch nicht erklärt werden konnten (Fig. 1). Die Kontur der geschädigten Ringform kann nicht über mechanische und chemische Angriffe entstehen. Es zeigten sich auch Schädigungen, die über die Funktionsflächen hinausgehen, ohne daß eine mechanische Einwirkung stattfand. Entsprechende Korrosionserscheinungen wurden als Elektrokorrosion bezeichnet (s. J.Nosowicz und A.Eiletz:"Operating performance of mechanical seals for boiler feed pumps"; in: BHR-Conference of Fluid Sealing, Maastricht 1997, 341-351).

Probleme bei der Herstellung wie die Rißbildung bei der Formgebung und nachfolgendem Sintern von grafithaltigem SiC lassen sich verhindern, wenn statt der Grafiteinlagerung in das SiC-Gefüge eine Grafit-Schicht auf die Oberfläche des SiC-Sinterkörpers aufgebracht wird.

JP04041590 A von NIPPON CEMENT KK offenbart die Herstellung eines grafitbeschichteten SiC Formkörpers, bei dem die Grafitschicht durch chemische Gasphasenabscheidung (CVD) aus Kohlenwasserstoffen im Gemisch mit Wasserstoff auf einem offenporigen SiC Formkörper gebildet wird. Das Verfahren ist aufwendig und teuer. Zudem ist die mittels CVD Verfahren abgeschiedene Grafitschicht nicht fest auf der SiC Oberfläche verankert. Die CVD-Grafitschicht dient vor allem zum Abdichten der offenen Poosität und als Schmiermittel, welches eine Verbesserung der Gleiteigenschaft über Eintrag in die Poren des SiC bewirkt. Der SiC-Grundkörper muß dazu offenporig sein, da die Poren wie Vorratsbehälter für das Gleitmittel Grafit wirken.

Aufgabe der vorliegenden Erfindung ist es, einen Formkörper aus gasdicht(=geschlossene Porosität) gesintertem SiC einer Dichte größer 90% seiner theoretischen Dichte mit einer Grafitschicht an seiner Oberfläche zur Verfügung zu stellen, bei dem die Grafitschicht fest mit dem SiC verbunden ist und bei dem die Elektrokorrosion verhindert ist.

Die Aufgabe wird gelöst durch einen Formkörper aus polykristallinem SiC, der dadurch gekennzeichnet ist, daß die Grafitschicht eine Dicke von 0,1 - 100 μm aufweist und durch oberflächliche thermische Zersetzung des SiC nach seiner Dichtsinterung bis auf geschlossene Porosität erzeugt wurde.

Vorzugsweise weist die Grafitschicht eine Dicke im Bereich von 0,5 - 20,0 μm auf. Vorzugsweise ist die Grafitschicht einlagig. Vorzugsweise weist die Grafitschicht einen spezifischen elektrischen Widerstand von 0,5 bis 5,0 mΩcm auf.

Besonders bevorzugt weist die Grafitschicht einen spezifischen elektrischen Widerstand von 0,8 bis 1,9 mΩcm auf.

Vorzugsweise befindet sich die Grafitschicht auf einer tribologisch wirksamen Funktionsfläche und/oder auf einer tribologisch unwirksamen Mantelfläche des Formkörpers.

Auf den tribologisch wirksamen Funktionsflächen verbessert die Grafit-Schicht unter den Bedingungen der Mischreibung bzw. des partiellen Trockenlaufs die Einlaufcharakteristik sowie den Reibwert des erfindungsgemäßen Formkörpers.

Auf den Mantelflächen des Formkörpers verhindert die Grafitschicht die Elektrokorrosion. Es zeigte sich, daß ein elektrisch isolierter Einbau eines bekannten SiC-Gleitrings zu einem Potentialaufbau und in folge daraus zu Korrosionserscheinungen am SiC Ring führt. Diese elektrische Korrosion läßt sich durch eine Ableitung des Potentials über eine elektrisch leitfähige Kontaktierung des SiC-Gleitrings verhindern. Da ein SiC Formkörper aufgrund des hohen spezifischen Widerstandes des SiC von etwa $1\text{-}10^4$ Ωcm keine ausreichende Oberflächenleitfähigkeit aufweist, ist die Ableitung des Potentials mit einem herkömmlichen SiC Material nicht gesichert möglich. Bei dem erfindungsgemäßen Formkörper erfolgt die Ableitung über die gut haftende elektrisch leitfähige Grafitschicht an der Oberfläche des Formkörpers.

Der erfindungsgemäße Formkörper besteht aus einem üblichen SiC Sinterkörper mit geschlossener Porosität, welcher mit einer durch oberflächliche Zersetzung erzeugten Grafitschicht einer Dicke von 0,1 bis 100 μm bedeckt ist.

Vorzugsweise besteht der erfindungsgemäße Formkörper aus 77-99,7 Masse% polykristallinem SiC, einer SiC-Kristallitgröße von 1 bis 2000 µm, sowie 0,2-5,0 Masse% Bor, Borverbindungen, Al, Al-Verbindungen, sowie 0,1-25,0 Masse% zusätzlichem Kohlenstoff (in Form von amorphem Kohlenstoff und/oder Grafit), wobei der Formkörper ggf. eine Gesamtporosität von bis zu 10 Vol% in Form unabhängiger geschlossener Poren aufweist.

Die Erfindung betrifft auch ein Verfahren zur Herstellung eines erfindungsgemäßen Formkörpers.

Dieses Verfahren ist dadurch gekennzeichnet, daß ein üblicher SiC-Sinterkörper mit geschlossener Porosität auf eine Temperatur oberhalb der Zersetzungstemperatur des SiC unter Vakuum oder unter Schutzgasatmosphäre (Ar, He etc.) erhitzt wird. Die oberflächliche thermische Zersetzung des dichtgesinterten SiC-Formkörpers erfolgt gemäß

$$SiC_{(fest)} \Rightarrow Si_{(gas)} + C_{(fest)}$$

Der gebildete Kohlenstoff verbleibt als Grafit an der Oberfläche (siehe Fig. 2), während das gebildete Silicium durch die Grafitschicht verdampft und in kalten Ofenbereichen kondensiert.

Der im erfindungsgemäßen Verfahren eingesetzte Formkörper kann nach einem beliebigen, drucklosen Sinterverfahren hergestellt worden sein.

Vorzugsweise wird beim erfindungsgemäßen Verfahren ein üblicher SiC-Sinterkörper mit geschlossener Porosität auf eine Temperatur zwischen 1600°C und 2200°C, vorzugsweise auf 1800°C bis 2000°C, erhitzt. Bei dieser Temperatur wird er für einen Zeitraum von 10 bis 180 min -vorzugsweise von 30 bis 90 mingehalten. Während dieser Zeit erfolgt die Bildung der Grafitschicht an der Oberfläche.

Vorzugsweise wird während des Verfahrens ein Ofeninnendruck von 1000 mbar bis $10^{-5}$ mbar -vorzugsweise 1 bis 50 mbaraufrechterhalten.

Anschließend wird der beschichtete Formkörper in üblicher Weise auf Raumtemperatur abgekühlt.

Bei der erfindungsgemäßen Grafitschicht handelt es sich überwiegend um hexagonalen 2H-Grafit. Dies ist aus Röntgenbeugungsdiagrammen, von bei 1800°C - 2000°C in Vakuum zersetzten SiC-Oberflächen aus den 3 Reflexen bei 2Θ = 26,6 °/45,4° und 54,7° (CuKα-Strahlung) zu erkennen. Die Dicke der Grafitschicht läßt sich durch Variation der Prozeßparameter Temperatur / Haltezeit / Druck innerhalb der genannten Grenzen gezielt einstellen. Dies ist im Balkendiagramm in Fig.3 anschaulich dargestellt.

Der spezifische elektrische Widerstand (Fig.4) des Grafits als Funktion der Bildungstemperatur zeigt kein kontinuierlich steigendes oder fallendes Verhalten. Im erfindungsgemäßen Verfahren laufen also 2 Mechanismen gegenläufig ab, die zu einem Widerstandsmaximum führen. Das Maximum bei 1,8 mΩcm entspricht dabei der handelsüblichen Reinstgrafitsorte EK88 der Fa Ringsdorff (Bonn).

Bei 1600°C und weniger bilden sich auch bei sehr gutem Vakuum ($10^{-3}$mbar) keine C-Schichten mehr und über 2050°C wird die Zersetzung von SiC unter 10 mbar Ofeninnendruck zu groß. Bis 2200°C kann hierbei mit Ar-Partialdruck bis Umgebungsdruck gegengesteuert werden.

Das erfindungsgemäße Verfahren kann unmittelbar im Anschluß an das übliche Dichtsintern zur Herstellung eines SiC-Formkörpers durchgeführt werden, es ist jedoch ebenso möglich, das Verfahren erst im Anschluß an die Hartbearbeitung des gesinterten Formkörpers durchzuführen.

Das erstgenannte Verfahren ist aus Kostengründen vorteilhaft, da es im gleichen Sinterzyklus wie die Herstellung des Ausgangssinterkörpers durchgeführt werden kann. Es ist allerdings nur dann durchführbar, wenn der gesinterte Formkörper vor Durchführung des erfindungsgemäßen Verfahrens ohne Nachbearbeitung bereits die für die jeweilige Anwendung geforderten Spezifikationen (z.B. Rauhigkeit, maßliche Toleranzen wie -Durchmesser-Höhe-Wandstärke) erfüllt. Dabei geht man vorzugsweise wie folgt vor: Im Anschluß an die in bekannter Weise durchgeführte Dichtsinterung eines SiC-Sinterkörpers werden die Parameter Temperatur/Haltezeit und Ofeninnendruck wie genannt gewählt. Dabei bildet sich durch Zersetzung des SiC die Grafitschicht bereits in der Abkühlphase des Sinterzyklus.

Falls zur Erfüllung der von der jeweiligen Anwendung geforderten Spezifikationen (Abmessungen, Oberflächenrauhigkeit) eine Hartbearbeitung des gesinterten SiC Formkörpers erforderlich ist, so wird das erfindungsgemäße Verfahren erst nach dieser Hartbearbeitung durchgeführt. Es ist dann erforderlich, das erfindungsgemäße Verfahren als einen eigenen Verfahrensschritt durchzuführen. Dieser wird vorteilhafterweise mit einer hohen Stückzahl von zu beschichtenden SiC Formkörpern in einem zur SiC Sinterung üblichen Ofenaggregat durchgeführt.

Im Anschluß an das erfindungsgemäße Verfahren sind keine zusätzlichen Qualitätsprüfungen notwendig da bei den im erfindungsgemäßen Verfahren angewendeten Glühtemperaturen keine Änderung der Abmessungen bzw. kein Verzug des SiC-Formkörpers mehr auftritt.

Die unkontrollierte Bildung von Grafitschichten beim Sintern von SiC im Vakuum wird in der japanischen Patentschrift JP59184769 A von Hitachi CHEM. Co LTD beschrieben. In dieser Schrift wird allerdings explizit gefordert, beim Sintern eines SiC Sinterkörpers ab 1800°C zur Verhinderung der Zersetzung des SiC und zur Vermeidung einer unerwünschten Kohlenstoffzersetzungsschicht das SiC mit höherem Ar-Partialdruck zu sintern. Im Gegensatz zum erfindungsgemäßen Verfahren, in dem die oberflächliche Zersetzung kontrolliert erst nach der Dichtsinterung, d.h. im Stadium der geschlossenen Porosität, bewerkstelligt wird, erfolgt hier die oberflächliche Zersetzung von SiC unter Bildung von Grafit bereits frühzeitig während des Drucklossintervorganges, was zu unerwünscht dicken und lokal inhomogenen Schichtdicken führt. Der in dieser Anmeldung in einem Vergleichsbeispiel genannte grafitbeschichtete SiC Sinterkörper ist als Gleitwerkstoff ungeeignet, da die Grafitschicht eine Dicke von 500 µm hat. Eine Grafitschicht in dieser Stärke ist inhomogen und nicht fest mit dem darunterliegenden SiC verbunden. Diffusionsprobleme des gasförmigen Siliciums durch die sich bildende Grafitschicht bewirken mit zunehmender Schichtdicke Spannungsrißprobleme sowie Blasenbildung an der Grenze zwischen SiC und Grafit, wodurch die Tendenz zum Abplatzen der Grafitschicht vom SiC Grundkörper zunimmt. Allgemein gilt, daß sich die Abplatzneigung proportional zur Schichtdicke verhält.

Die Erfindung betrifft ferner die Verwendung eines erfindungsgemaßen Formkörpers als Verschleißteil sowie ein Verschleißteil, welches dadurch gekennzeichnet ist, daß es aus einem erfindungsgemäßen Formkörper besteht. Bei den Verschleißteilen handelt es sich vorzugsweise um Ring oder Gegenring einer mechanischen Gleitringdichtung, oder um Lagerteile. Die Erfindung betrifft zudem Gleitringdichtungen, die ein erfindungsgemäßes Verschleißteil enthalten.

Beispiele für solche Dichtungen sind im folgenden genannt:

Eine Gleitringdichtung, bestehend aus einem SiC-Gleitring und einem Kohlegrafit-Gegenring, die dadurch gekennzeichnet ist, daß der SiC-Gleitring ein erfindungsgemäßer Formkörper ist.

Eine Gleitringdichtung, bestehend aus einem SiC-Gleitring und einem SiC-Gegenring, dadurch gekennzeichnet, daß der SiC-Gleitring oder der SiC-Gegenring ein erfindungsgemäßer Formkörper ist. In einer Variante dieser Gleitringdichtung liegt in Gleitring und Gegenring ein SiC-Gefüge mit bimodaler Verteilung bestehend aus äquiaxialen oder plattenförmigen Kristalliten eines Durchmessers bis 50 µm und plattenförmigen Kristalliten einer Länge bis 2000 µm vor.

In einer weiteren Variante dieser Gleitringdichtung liegt in Gleit- und Gegenring ein monomodales, feinkörniges SiC-Gefüge mit Kristallitdurchmesser bis zu 10µm vor. Dabei ist einer der beiden Ringe ein erfindungsgemäßer Formkörper. In einer anderen Variante einer erfindungsgemäßen Gleitringdichtung, bestehend aus einem rotierenden SiC-Gleitring und einem stationären SiC-Gegenring, besteht der rotierende Gleitring aus monomodalem, feinkörnigen SiC-Gefüge eines Durchmessers bis zu 10 µm und der stationäre Gegenring aus bimodalem grobkörnigen Plattengefüge mit einer Plattenlänge bis zu 2000 µm, wobei die Funktionsfläche mindestens eines Ringes eine Grafitschicht aufweist. In einer anderen Variante einer erfindungsgemäßen Gleitringdichtung, bestehend aus einem rotierenden SiC-Gleitring und einem stationären SiC-Gegenring weist mindestens einer der Ringe ein Gefüge mit kugelförmigen, abgeschlossenen Poren der Größe 40 - 100 µm auf, und mindestens einer der Ringe weist eine Grafitschicht auf.

Bevorzugt wird ein erfindungsgemäßer grafitbeschichteter SiC Formkörper in einer hart/hart-Paarung angewendet.

Ein erfindungsgemäßer grafitbeschichteter SiC Formkörper ist im Dichtungsbereich auch für hart/weich-Paarungen geeignet.

Hart/hart bedeutet, daß Ring und Gegenring aus einem gesinterten Hartstoff bestehen; z.B. Ring und Gegenring sind aus SiC wobei ein erfindungsgemäß beschichteter SiC Ring auch als hart gilt. Hart/weich bedeutet, daß ein Ring aus einem Hartstoff besteht und der gegenüberliegende Ring aus Kohlegrafit besteht. (z.B. Gleitring aus SiC und Gegenring aus Kohlegrafit).

Auch auf hartbearbeiteten Funktionsflächen wirkt eine Grafitschicht positiv auf das Einlaufverhalten der Dichtung. Bei der weiteren Nutzung in einer Dichtung verhindert die Grafitschicht auch die hydrothermale Korngrenzenkorrosion. Sie verlängert somit die Lebensdauer einer Gleitringdichtung.

Als weiterer positiver Effekt zeigte sich, daß ein grobkörniges, besonders korrosionsbeständiges SiC (käuflich erhältlich bei der Firma ESK (Kempten) unter der Bezeichnung EKasic W) nachdem es erfindungsgemäß mit einer Grafitschicht versehen wurde, auch gegen feinkörniges SiC hervorragend läuft. Die mechanische Belastung, insbesondere beim-Anfahren, ist hier von Anfang an gering. Da die Ursache für einen zu frühen Ausfall überwiegend in der Anfahrphase(=hoher Mischreibungsbereich) liegt, kann auf diese Weise der prozentuelle Anteil Funktionsausfall'drastisch gesenkt werden. So eine Anfangsschädigung wird mit unbeschichteten hart/hart-Paarungen, insbesondere bei Gleitringdichtungen, aus SiC-Werkstoffen mit unterschiedlichen Gefügen häufig beobachtet.

Die Grafitschicht auf EKasic W verbessert auch in anderer Hinsicht das Einlaufverhalten einer Gleitringdichtung. Die Einlaufcharakteristik dieses Werkstoffes ist normalerweise etwas ruppig. Die Grafitbeschichtung der Funktionsfläche korrigiert dies zu einer ruhigen und gleichmäßigen Startphase und verringert gleichzeitig weiter die Anfälligkeit gegen Korngrenzenangriff.

Die gute elektrische Leitfähigkeit der Grafitschicht verhindert durch oberflächliche Ableitung einen Potentialaufbau, so daß Elektrokorrosion nicht auftreten kann.

Fig.1 zeigt eine typische Form der Elektrokorrosion an einer im praktischen Einsatz benutzten Gleitringdichtung gemäß Stand der Technik im Querschnitt. Der Gleitring (EKasic D unbeschichtet) wurde während des Gebrauchs ausgehöhlt, während sich in den Gegenring (EKasic D unbeschichtet) nur die beiden überstehenden Kanten innen und außen einarbeiteten. Die mittige Fläche des Gegenringes blieb fast unberührt.

Fig. 2 zeigt die rasterelektronenmikroskopische Aufnahme der Bruchfläche eines erfindungsgemäßen mit Grafit beschichteten Gleitringes aus drucklosgesintertem SiC. Die Grafitschicht wurde durch das erfindungsgemäße Verfahren (Druck 10 mbar / Temperatur 1900°C / Haltezeit 90 min) erzeugt. Deutlich ist die ca. 6 µm dicke Grafitschicht zu erkennen.

Fig.3 zeigt die Schichtdicken erfindungsgemäßer Grafitschichten auf SiC

a) als Funktion der Glühtemperatur bei 30 min Haltezeit
b) als Funktion der Haltezeit bei 1850°C und 1900°C

Fig.4 zeigt den spezifischen elektrischen Widerstand einer erfindungsgemäßen Grafitschicht

a) als Funktion der Glühtemperatur bei 30min Haltezeit
b) als Funktion der Haltezeit bei 1850°C und 1900°C

Die Erfindung wird anhand der folgenden Beispiele weiter erläutert:

Beispiele 1 - 9 Erzeugung von erfindungsgemäßen Sinterkörpern

Drucklosgesinterte SiC-Formkörper der Sinterdichte ≥ 3,10 g/cm$^3$ wurden mittels des erfindungsgemäßen Verfahrens mit einer Grafitschicht versehen. Das Verfahren wurde in einem Hochtemperatur-Vakuum-Ofen mit Grafitaufbau durchgeführt. Die SiC-Sinterkörper wurden zunächst in 60 min unter Rotationspumpenvakuum im Bereich 1-10 mbar auf 1050°C erhitzt, im Pyrometer-geführten Temperaturprogramm anschließend in ca 80 min auf 1700°C erhitzt (entspricht einer Aufheizrate von ca. 500°C/h) und in weiteren 15 min auf 1800°C (entspricht einer Aufheizrate von 400°C/h) erhitzt.

Ab hier wurde die variable Zieltemperatur der Beispiele 1-9 (1800°C - 2000°C; siehe Tab. 1), mit einer Aufheizrate von 300°C/h angefahren. In diesen Beispielen wurde die Haltezeit von 30- auf 60- auf 90 min bei 2 mittleren Temperaturen variiert (siehe Tab. 1). Die variablen Versuchsparameter Temp/Haltezeit sind in Tab.1 wiedergegeben. Die elektr. Leitfähigkeit und der spez. elektr. Widerstand der Grafitschicht der so erhaltenen erfindungsgemäßen grafitbeschichteten SiC Formkörper sind ebenfalls in Tab. 1 wiedergegeben.

Die Schichtbildungstemperaturen sind stark vom Atmosphärendruck abhängig. So konnten bereits bei 1780°C und unter einem Druck von 1x10$^{-1}$mbar Grafitschichten erzeugt werden. Unter einem Ar-Partialdruck von ca. 300 mbar erfolgte die Schichtbildung erst bei 2150°C. Vorzugsweise werden Gasdrücke zwischen 1 und 10 mbar bei Temperaturen von 1800°C bis 2000°C angewendet

Tab.1:

| Elektrische Leitfähigkeit bzw spezifischer elektrischer Widerstand von C-Schichten auf SiC gemessen nach Van der Pauw ** | | | | |
|---|---|---|---|---|
| Beispiel | Temperatur /Haltezeit | C-Schicht | Leitfähigkeit | Widerstand |
| | °C/min * | D in µm | kS/m | Ωcm |
| 1 | 1800/30 | 0,9 | 69,1 | 1,45 10$^{-3}$ |
| 2 | 1850/30 | 2,1 | 59,2 | 1,69 10$^{-3}$ |
| 3 | 1850/60 | 3,0 | 72,1 | 1,39 10$^{-3}$ |
| 4 | 1850/90 | 5,1 | 63,9 | 1,57 10$^{-3}$ |
| 5 | 1900/30 | 4,9 | 56,2 | 1,78 10$^{-3}$ |
| 6 | 1900/60 | 5,1 | 79,6 | 1,26 10$^{-3}$ |
| 7 | 1900/90 | 6,4 | 82,0 | 1,22 10$^{-3}$ |
| 8 | 1950/30 | 5,8 | 89,3 | 1,12 10$^{-3}$ |
| 9 | 2000/30 | 7,8 | 116,4 | 0,86 10$^{-3}$ |
| Vergleich | SiC-Oberfläche | (≈0,1) | 0,05 | 2 10$^{3}$ |

*bei 1-10 mbar

**4-Punktmeßmethode, Kontaktabstände 10,00mm, (Microvoltmeter Marke:Keithley, Typ 197 A)

Beispiel 10-11 Einsatz der erfindungsgemäßen Gleitringe auf einem Prüfstand der Fa. Burgmann.

Beispiel 10:

Eine erfindungsgemäße Gleitringdichtung (erfindungsgemäßer Gleitring: SSiC mit feinkörnigem äquiaxialen Gefüge und einer 5 µm dicken Grafitschicht/ Gegenring: SSiC mit feinkörnigem äquiaxialen Gefüge) wurde in einer mit 12 bar direkt belasteten Dichtung in voll entsalztem Wasser eingesetzt. Nach 48h mit einer Gleitgeschwindigkeit von 7,6 m/sec wurde der Versuch unterbrochen und nach weiteren 500 h Laufzeit beendet. Es zeigte sich, daß die Einlaufzeit fast gegen 0 geht, da sich von Anfang an ein sehr ruhiges und gleichmäßiges Laufbild einstellt. Eine keramografische Untersuchung der Funktionsflächen nach 48h wie auch nach weiteren 500 h zeigte eine ungeschädigte Laufspur.

Beispiel 11:

Eine erfindungsgemäße Gleitringdichtung (Gleitring gemäß Stand der Technik: SSiC mit feinkörnigem äquiaxialen Gefüge/erfindungsgemäßer Gegenring: grobkörniges Gefüge mit bis 2000 µm großen Platten aus SiC käuflich erhältlich unter der Bezeichnung EKasic® W aber versehen mit einer 5 µm dicken Grafitschicht) wurde in einer mit 12 bar direkt belasteten Dichtung in voll entsalztem Wasser eingesetzt. Nach 48h mit einer Gleitgeschwindigkeit von 7,6 m/sec wurde der Versuch unterbrochen und nach weiteren 500 h Laufzeit beendet.

Das Einlaufverhalten der Dichtung entsprach Bsp. 10. Dieses Beispiel belegt besonders gut die vorteilhafte Auswirkung der Grafitschicht, eine Gleitringkombination wie hier eingesetzt, aber ohne Grafitschicht, zeigt unter diesen Laufbedingungen schon nach 48 h Beschädigungen der Funktionsflächen.

Die keramografische Untersuchung der Funktionsflächen zeigte selbst nach 500 h Laufzeit keine derartigen Schädigungen, sondern ideal eingelaufene Funktionsflächen.

**Patentansprüche**

1. Formkörper auf Basis von polykristallinem SiC mit einer Dichte größer 90% seiner theoretischen Dichte und mit einer Grafitschicht an seiner Oberfläche, **dadurch gekennzeichnet, daß** die Grafitschicht kristallin ist, eine Dicke von 0,1 - 100 µm aufweist, und durch oberflächliche thermische Zersetzung des SiC nach seiner Dichtsinterung bis auf geschlossene Porosität erzeugt wurde.

2. Formkörper gemäß Anspruch 1, **dadurch gekennzeichnet, daß** die Grafitschicht eine Dicke im Bereich von 0,5 - 20,0 µm aufweist.

3. Formkörper nach einem der Ansprüche 1 oder 2, **dadurch gekennzeichnet, daß** die Grafitschicht einen spezifischen elektrischen Widerstand von 0,5 bis 5,0 mΩcm aufweist.

4. Formkörper gemäß einem der Ansprüche 1 bis 3, **dadurch gekennzeichnet, daß** die Grafitschicht einen spezifischen elektrischen Widerstand von 0,8 bis 1,9 mΩcm aufweist.

5. Formkörper gemäß einem der Ansprüche 1 bis 4, **dadurch gekennzeichnet, daß** er aus
77-99,7 Masse% SiC einer SiC-Kristallitgröße von 1 bis 2000 µm sowie
0,2-5,0 Masse% Bor, Borverbindungen, Al, Al-Verbindungen, sowie
0,1-25,0 Masse% zusätzlichem Kohlenstoff (in Form von amorphem Kohlenstoff und/oder Grafit) besteht,
wobei der Formkörper ggf. eine Gesamtporosität von bis zu 10 Vol% in Form unabhängiger geschlossener Poren aufweist.

6. Verfahren zum Herstellen eines SiC Formkörpers nach einem der Ansprüche 1 bis 5, **dadurch gekennzeichnet, daß** ein SiC-Sinterkörper mit geschlossener Porosität auf eine Temperatur oberhalb der Zersetzungstemperatur des SiC unter Vakuum oder unter Schutzgasatmosphäre erhitzt wird.

7. Verfahren nach Anspruch 6, **dadurch gekennzeichnet, daß** der SiC-Formkörper auf eine Temperatur zwischen 1600°C und 2200°C erhitzt wird und bei dieser Temperatur für einen Zeitraum von 10 bis 180 min gehalten wird.

8. Verfahren nach Anspruch 6 oder 7, **dadurch gekennzeichnet, daß** ein Gasdruck von 1000 mbar bis $10^{-5}$ mbar aufrechterhalten wird.

9. Verwendung eines Formkörpers nach einem der Ansprüche 1 bis 5 als Verschleißteil.

10. Verschleißteil, **dadurch gekennzeichnet, daß** es aus einem Formkörper gemäß einem der Ansprüche 1 bis 5 besteht.

11. Gleitringdichtung, enthaltend ein Verschleißteil gemäß Anspruch 10.

12. Gleitringdichtung gemäß Anspruch 11, bestehend aus einem SiC-Gleitring und einem Kohlegrafit-Gegenring, **dadurch gekennzeichnet, daß** der SiC-Gleitring ein Formkörper gemäß einem der Ansprüche 1 bis 5 ist.

13. Gleitringdichtung gemäß Anspruch 11, bestehend aus einem SiC-Gleitring und einem SiC Gegenring, **dadurch gekennzeichnet, daß** der SiC-Gleitring oder der SiC Gegenring ein Formkörper gemäß einem der Ansprüche 1 bis 5 ist.

14. Gleitringdichtung gemäß Anspruch 13, **dadurch gekennzeichnet, daß** in Gleitring und Gegenring ein SiC-Gefüge mit bimodaler Verteilung bestehend aus äquiaxialen oder plattenförmigen Kristalliten eines Durchmessers bis 50 µm und plattenförmigen Kristalliten einer Länge bis 2000 µm vorliegt.

15. Gleitringdichtung gemäß Anspruch 13, **dadurch gekennzeichnet, daß** in Gleitring und Gegenring ein monomodales feinkörniges Gefüge vorliegt mit einem Kristallitdurchmesser von <10 µm.

16. Gleitringdichtung gemäß Anspruch 11, bestehend aus einem rotierenden SiC-Gleitring und einem stationären SiC-Gegenring, **dadurch gekennzeichnet, daß** der rotierende Gleitring zu mindestens 98 Vol% aus monomodalem, feinkörnigen SiC-Gefüge mit einem Kristallitdurchmesser bis zu 10 µm besteht und der stationäre Gegenring aus bimodalem grobkörnigen Plattengefüge mit einer Plattenlänge bis zu 2000 µm besteht, wobei die Funktionsfläche mindestens eines Ringes eine Grafitschicht aufweist.

17. Gleitringdichtung, bestehend aus einem rotierenden SiC-Gleitring und einem stationären SiC-Gegenring, **dadurch gekennzeichnet, daß** mindestens einer der Ringe ein Gefüge mit kugelförmigen, abgeschlossenen Poren der Größe 40 - 100 µm und mindestens einer der Ringe eine Grafitschicht aufweist.

## Claims

1. Shaped body based on polycrystalline SiC and having a density of greater than 90% of its theoretical density and a graphite layer on its surface, **characterized in that** the graphite layer is crystalline, has a thickness of 0.1-100 µm and has been produced by thermal surface decomposition of the SiC after it has been sintered to closed porosity.

2. Shaped body according to Claim 1, **characterized in that** the graphite layer has a thickness in the range 0.5 - 20.0 µm.

3. Shaped body according to Claim 1 or 2, **characterized in that** the graphite layer has a specific electrical resistance of from 0.5 to 5.0 mΩcm.

4. Shaped body according to any of Claims 1 to 3, **characterized in that** the graphite layer has a specific electrical resistance of from 0.8 to 1.9 mΩcm.

5. Shaped body according to any of Claims 1 to 4, **characterized in that** it comprises
77-99.7% by mass of SiC having an SiC crystallite size of from 1 to 2 000 µm and
0.2-5.0% by mass of boron, boron compounds, Al, Al compounds, and
0.1-25.0% by mass of additional carbon (in the form of amorphous carbon and/or graphite),
where the shaped body may have a total porosity of up to 10% by volume in the form of independent closed pores.

6. Process for producing a shaped SiC body according to any of Claims 1 to 5, **characterized in that** an SiC sintered body having closed porosity is heated to a temperature above the decomposition temperature of SiC under reduced pressure or under a protective gas atmosphere.

7. Process according to Claim 6, **characterized in that** the shaped SiC body is heated to a temperature in the range from 1 600°C to 2 200°C and is held at this temperature for a period of from 10 to 180 minutes.

**8.** Process according to Claim 6 or 7, **characterized in that** a gas pressure of from 1 000 mbar to $10^{-5}$ mbar is maintained.

**9.** Use of a shaped body according to any of Claims 1 to 5 as a wear part.

**10.** Wear part, **characterized in that** it comprises a shaped body according to any of Claims 1 to 5.

**11.** Sliding ring seal comprising a wear part according to Claim 10.

**12.** Sliding ring seal according to Claim 11 comprising an SiC sliding ring and a graphite counterring, **characterized in that** the SiC sliding ring is a shaped body according to any of Claims 1 to 5.

**13.** Sliding ring seal according to Claim 11 comprising an SiC sliding ring and an SiC counterring, **characterized in that** the SiC sliding ring or the SiC counterring is a shaped body according to any of Claims 1 to 5.

**14.** Sliding ring seal according to Claim 13, **characterized in that** the sliding ring and the counterring have an SiC microstructure having a bimodal distribution comprising equiaxial or tabular crystallites having a diameter of up to 50 µm and tabular crystallites having a length of up to 2 000 µm.

**15.** Sliding ring seal according to Claim 13, **characterized in that** the sliding ring and counterring have a monomodal fine-grained microstructure having a crystallite diameter of < 10 µm.

**16.** Sliding ring seal according to Claim 11 comprising a rotating SiC sliding ring and a stationary SiC counterring, **characterized in that** the rotating sliding ring comprises at least 98% by volume of a monomodal, fine-grained SiC microstructure having a crystallite diameter of up to 10 µm and the stationary counterring comprises a bimodal coarse-grained platelet microstructure having a platelet length of up to 2 000 µm, where the functional surface of at least one ring has a graphite layer.

**17.** Sliding ring seal comprising a rotating SiC sliding ring and a stationary SiC counterring, **characterized in that** at least one of the rings has a microstructure having spherical, closed pores having a size of 40-100 µm and at least one of the rings has a graphite layer.

## Revendications

**1.** Corps moulé à base de SiC polycristallin ayant une densité de plus de 90 % de sa densité théorique et comportant une couche de graphite à sa surface, **caractérisé en ce que** la couche de graphite est cristalline, présente une épaisseur de 0,1-100 µm, et a été produite par décomposition thermique superficielle du SiC après son frittage dense jusqu'à porosité fermée.

**2.** Corps moulé selon la revendication 1, **caractérisé en ce que** la couche de graphite présente une épaisseur dans la plage de 0,5 à 20,0 µm.

**3.** Corps moulé selon la revendication 1 ou 2, **caractérisé en ce que** la couche de graphite présente une résistance électrique spécifique de 0,5 à 5,0 mΩcm.

**4.** Corps moulé selon l'une quelconque des revendications 1 à 3, **caractérisé en ce que** la couche de graphite présente une résistance électrique spécifique de 0,8 à 1,9 mΩcm.

**5.** Corps moulé selon l'une quelconque des revendications 1 à 4, **caractérisé en ce qu'**il est constitué de
77-99,7 % en masse de SiC ayant une taille de cristallites de SiC de 1 à 2 000 µm, ainsi que de
0,2-5,0 % en masse de bore, de composés contenant du bore, d'Al, de composés contenant de l'Al, ainsi que de
0,1-25,0 % en masse de carbone supplémentaire (sous forme de carbone amorphe et/ou de graphite),
le corps moulé présentant une porosité totale de jusqu'à 10 % en volume, sous forme de pores fermés indépendants.

6. Procédé pour la fabrication d'un corps moulé à base de SiC selon l'une quelconque des revendications 1 à 5, **caractérisé en ce qu'**un corps fritté à base de SiC, à porosité fermée, est chauffé à une température supérieure à la température de décomposition du SiC, sous vide ou sous une atmosphère constituée d'un gaz protecteur.

7. Procédé selon la revendication 6, **caractérisé en ce que** le corps moulé à base de SiC est chauffé à une température comprise entre 1 600°C et 2 200°C et maintenu à cette température pendant une durée de 10 à 180 minutes.

8. Procédé selon la revendication 6 ou 7, **caractérisé en ce qu'**on maintient une pression de gaz de 1 000 mbars à 10-5 mbar.

9. Utilisation d'un corps moulé selon l'une quelconque des revendications 1 à 5, en tant que pièce d'usure.

10. Pièce d'usure, **caractérisée en ce qu'**elle consiste en un corps moulé selon l'une quelconque des revendications 1 à 5.

11. Garniture d'étanchéité à bague de friction, contenant une pièce d'usure selon la revendication 10.

12. Garniture d'étanchéité à bague de friction selon la revendication 11, constituée d'une bague de friction en SiC et d'un adaptateur femelle en graphite, **caractérisée en ce que** la bague de friction en SiC est un corps moulé selon l'une quelconque des revendications 1 à 5.

13. Garniture d'étanchéité à bague de friction selon la revendication 11, constituée d'une bague de friction en SiC et d'un adaptateur femelle en SiC, **caractérisée en ce que** la bague de friction en SiC ou l'adaptateur femelle en SiC est un corps moulé selon l'une quelconque des revendications 1 à 5.

14. Garniture d'étanchéité à bague de friction selon la revendication 13, **caractérisée en ce qu'**une structure en SiC à distribution bimodale, constituée de cristallites équiaxiaux ou en plaquettes, d'un diamètre allant jusqu'à 50 µm et de cristallites en plaquettes ayant une longueur de jusqu'à 2 000 µm, se trouve dans la bague de friction et l'adaptateur femelle.

15. Garniture d'étanchéité à bague de friction selon la revendication 13, **caractérisée en ce qu'**une structure unimodale à grains fins, ayant un diamètre de cristallites de $<10$ µm, se trouve dans la bague de friction et l'adaptateur femelle.

16. Garniture d'étanchéité à bague de friction selon la revendication 11, constituée d'une bague de friction rotative en SiC et d'un adaptateur femelle stationnaire en SiC, **caractérisée en ce que** la bague de friction rotative consiste à raison d'au moins 98 % en volume en une structure unimodale à grains fins ayant un diamètre de cristallites allant jusqu'à 10 µm et l'adaptateur femelle stationnaire consiste en une structure bimodale de plaquettes à gros grains ayant une longueur de plaquettes allant jusqu'à 2 000 µm, la surface de fonction d'au moins une bague présentant une couche de graphite.

17. Garniture d'étanchéité à bague de friction, constituée d'une bague de friction rotative en SiC et d'un adaptateur femelle stationnaire en SiC, **caractérisée en ce qu'**au moins l'une des bagues présente une structure à pores sphériques fermés ayant une taille de 40-100 µm et au moins l'une des bagues comporte une couche de graphite.

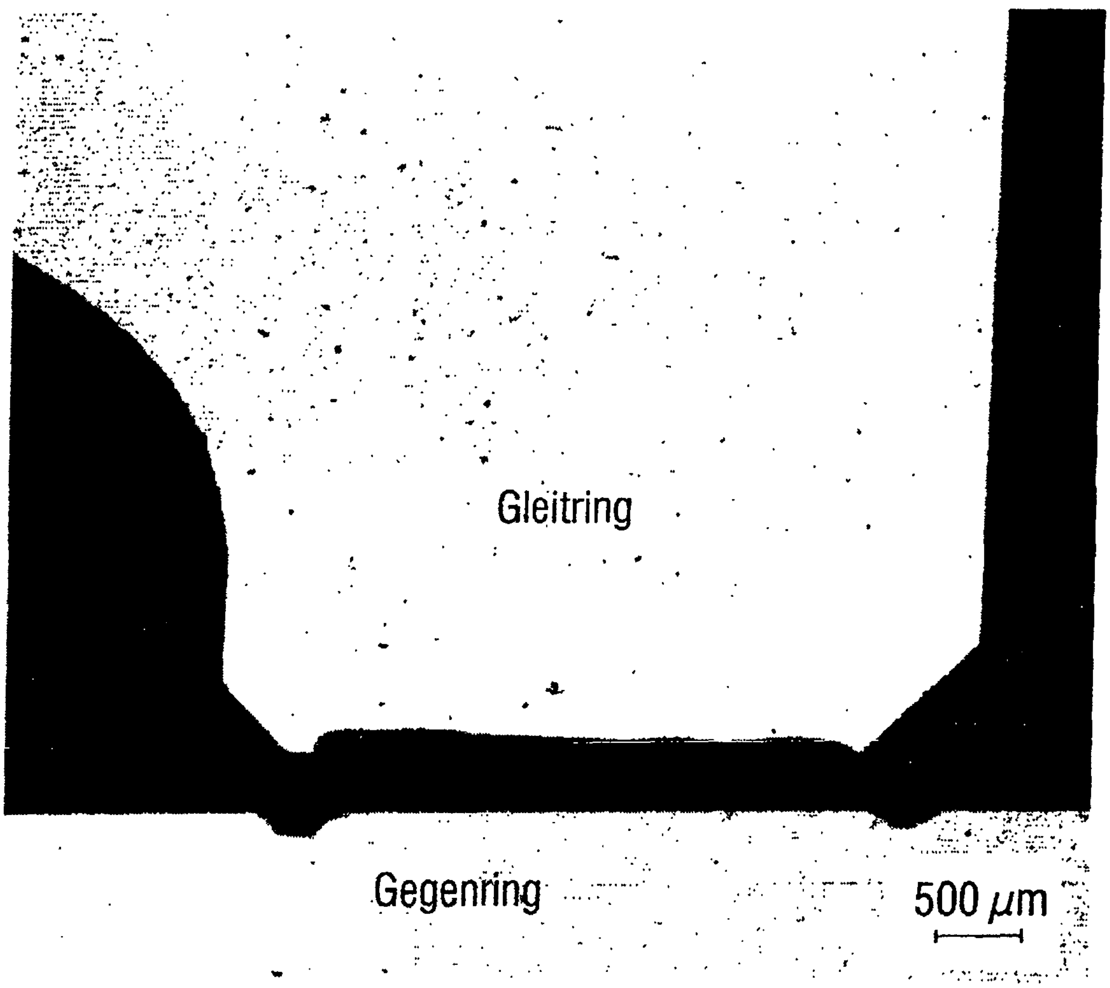


**Fig. 1:** Lichtmikroskopische Aufnahme von Anschliffen korrodierter SSiC-Dichtungsringe (Anschliffrichtung: senkrecht zur Funktionsfläche)

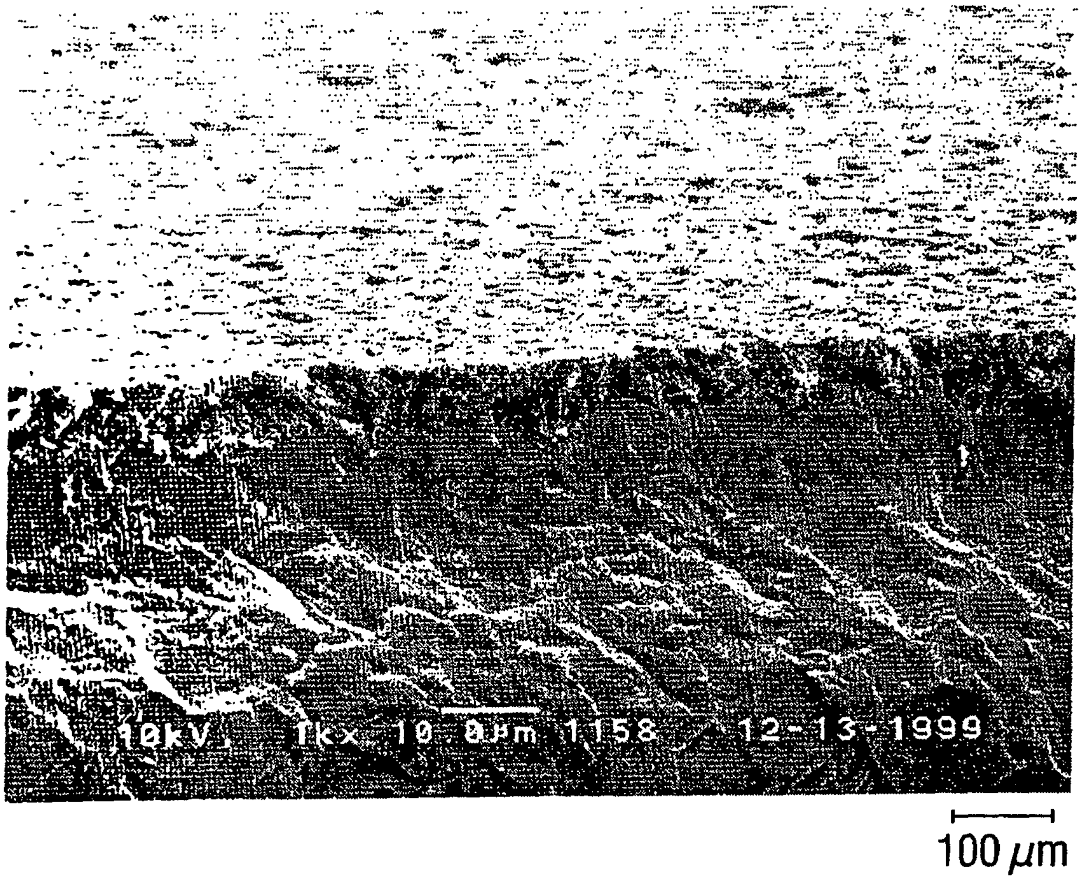


**Fig. 2: Rasterelektronenmikroskopische Aufnahme der Bruchfläche eines SSiC-Gleitringes mit erfindungsgemäßer, festverankerter Grafitschicht (1900°C/90min)**

Fig. 3a

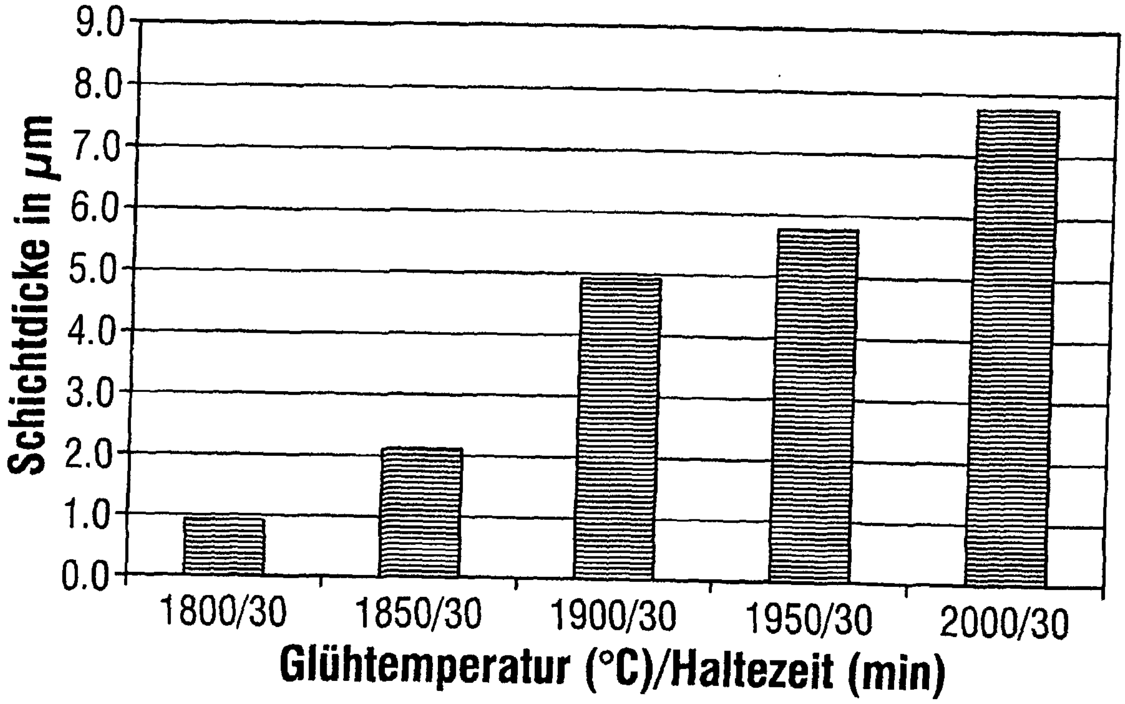
9.0
8.0
7.0
6.0
5.0
4.0
3.0
2.0
1.0
0.0
Schichtdicke in μm
1800/30
1850/30
1900/30
1950/30
2000/30
Glühtemperatur (°C)/Haltezeit (min)

Fig. 3b

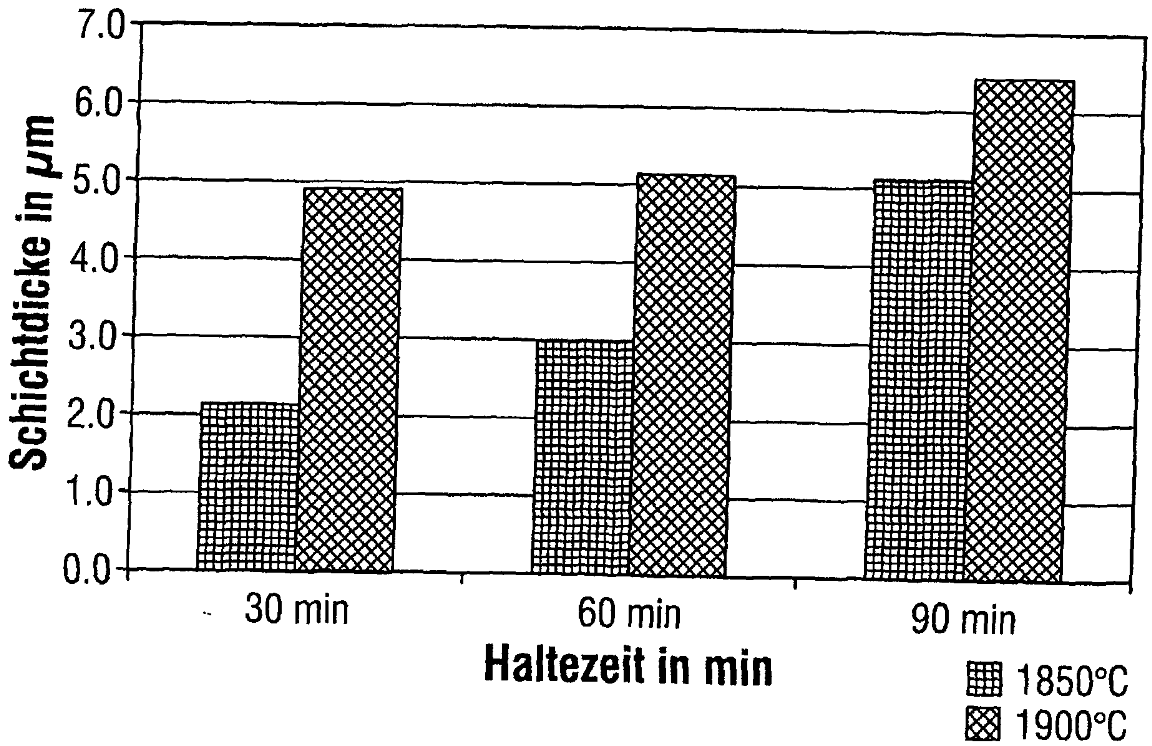
7.0
6.0
5.0
4.0
3.0
2.0
1.0
0.0
Schichtdicke in μm
30 min
60 min
90 min
Haltezeit in min
1850°C
1900°C

Fig. 4a

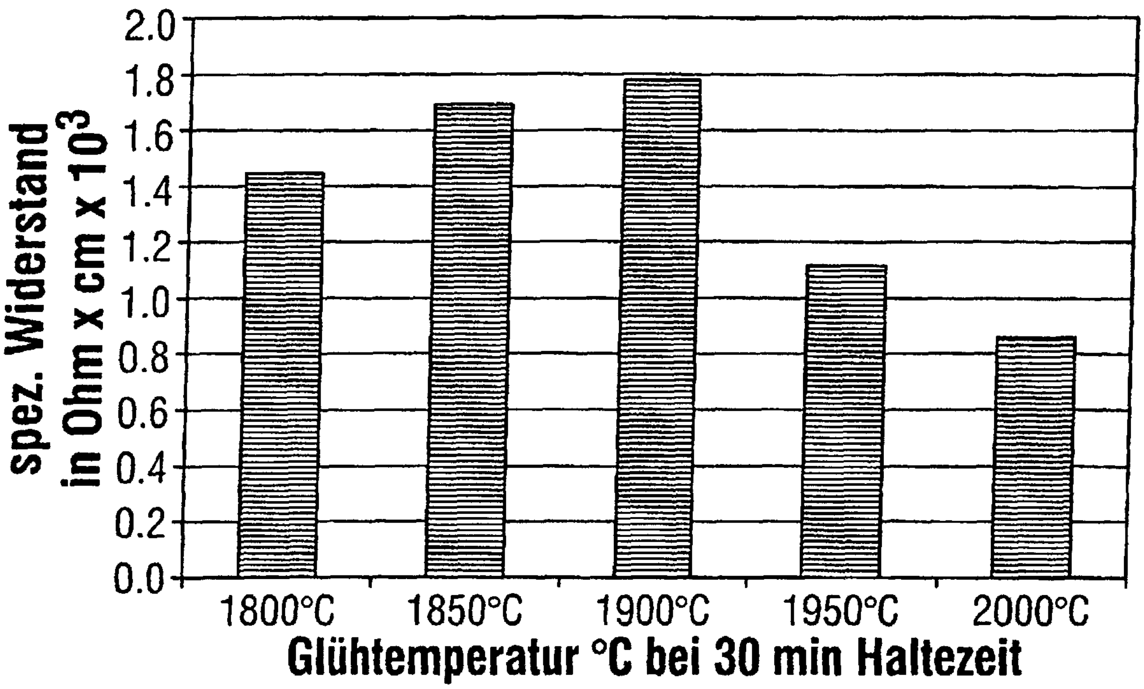
2.0
1.8
1.6
1.4
1.2
1.0
0.8
0.6
0.4
0.2
0.0
spez. Widerstand in Ohm x cm x $10^3$
1800°C
1850°C
1900°C
1950°C
2000°C
Glühtemperatur °C bei 30 min Haltezeit

Fig. 4b

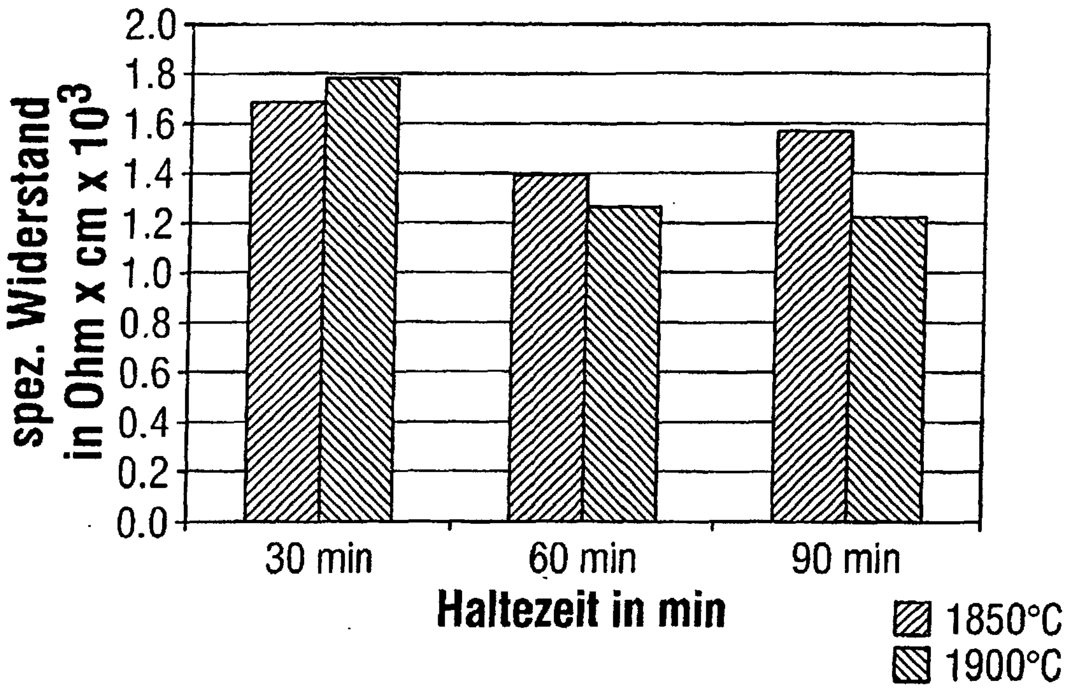
2.0
1.8
1.6
1.4
1.2
1.0
0.8
0.6
0.4
0.2
0.0
spez. Widerstand in Ohm x cm x $10^3$
30 min
60 min
90 min
Haltezeit in min
1850°C
1900°C